# FASCICULE DE BREVET EUROPEEN

(11) **EP 4 446 230 B1**
(45) Date de publication et mention de la délivrance du brevet: **14.10.2026**
(21) Numéro de dépôt: 24168907.4
(22) Date de dépôt: 08.04.2024
(51) Int. Cl.: B64D 29/06

(54) **ENSEMBLE PROPULSIF A CAPOT MOTEUR AMELIORE, ET AERONEF COMPRENANT UN TEL ENSEMBLE**
ANTRIEBSEINHEIT MIT VERBESSERTER MOTORABDECKUNG UND FLUGZEUG MIT SOLCH EINER ANORDNUNG
PROPULSION ASSEMBLY WITH IMPROVED ENGINE COWL, AND AIRCRAFT COMPRISING SUCH AN ASSEMBLY

(30) Priorité: 14.04.2023 FR 2303762
(43) Date de publication de la demande: 16.10.2024
(73) Titulaire: AIRBUS OPERATIONS (S.A.S.), 31060 Toulouse (FR)
(72) Inventeur: PAUTIS, Olivier, 31060 TOULOUSE (FR); COLMAGRO, Jérôme, 31060 TOULOUSE (FR)
(74) Mandataire: Airbus-OPS SAS

(56) Documents cités:
- GB-A- 724 052
- US-A1- 2011 038 725
- US-A1- 2014 301 835
- US-A1- 2020 182 194

## Description

### DOMAINE TECHNIQUE

La présente invention concerne un ensemble propulsif d' aéronef comprenant un dispositif amélioré de capotage de moteur d'aéronef. L'invention concerne plus particulièrement un agencement de charnières et d'axe(s) de charnières d'au moins un capot moteur d'un ensemble propulsif d'aéronef.

### ÉTAT DE LA TECHNIQUE ANTÉRIEURE

De nombreux aéronefs sont équipés de moteurs à double flux comprenant une partie interne, laquelle comprend une veine primaire d'une turbine de puissance, et une partie externe laquelle comprend une veine secondaire autour de la turbine de puissance. Dans une telle configuration, les parties interne et externe sont agencées concentriquement l'une par rapport à l'autre, la partie interne étant agencée intérieurement à la partie externe, et cette dernière étant donc agencée de façon périphérique à la partie interne. Un mât moteur permet la fixation d'un tel moteur à double flux sous la voilure de l'aéronef qui en est équipé, et un carénage moteur, composé de capots fixes et de capots amovibles ou articulés, entoure l'essentiel de ces éléments à des fins de protection et de sorte à obtenir de bonnes performances aérodynamiques de l'aéronef. Un accès aux éléments d'un moteur est nécessaire à la réalisation d'opérations d'assemblage, de contrôles et de maintenance et des capots moteur articulés sont agencés de sorte à pouvoir être aisément ouverts ou fermés. Très souvent, les capots moteur mobiles sont articulés autour de charnières. Les charnières sont principalement agencées par un assemblage de ferrures autour d'un axe. Les ferrures d'un capot mobile sont souvent agencées sous forme d'un « col de cygne » pour offrir un déport permettant une trajectoire avantageuse d'un capot mobile par rapport à des éléments fixes de l'ensemble.

Des architectures de moteurs ont été conçues et réalisées, notamment à des fins d'allégement du poids, d'amélioration de la performance, et de réduction d'émissions carbonées. L'une de ces architectures récentes est dite de type « Turbopropulseur », et correspond à un ensemble moteur présentant une soufflante non carénée dans lequel la soufflante fixée directement sur la turbine de puissance (partie interne du moteur double flux) est agencée en dehors de la nacelle, la nacelle ne comprenant alors que la partie interne, autour du flux primaire. La forme globale d'un moteur de type Turbopropulseur est donc différente de celle d'un moteur à double flux tel que susmentionné et l'ensemble du carénage moteur est en conséquence différent lui aussi, ce qui implique des modifications structurelles notamment pour l'agencement des capots, et en particulier des capots articulés d'un moteur. Les documents US 2014/301835 A1, GB 724052, US 2011/038725 A1 et US 2020/182194 A1 décrivent des ensembles de propulsion connus.

Il existe donc un besoin d'agencer ces différents éléments d'un ensemble propulsif d'aéronef de type turbopropulseur sans avoir à modifier des éléments structurels comme la structure principale du mât moteur, par exemple, ainsi que la fixation du mât moteur sous la voilure ou en modifiant ces éléments *a minima.*

### EXPOSÉ DE L'INVENTION

Un objet de la présente invention est d'offrir des possibilités d'agencement limitant au maximum les modifications structurelles d'un aéronef en vue de la fixation sous voilure de moteurs de type turbopropulseur.

A cet effet, il est proposé un ensemble propulsif d'aéronef comprenant un mât moteur présentant une forme globale de caisson et une face supérieure, une partie interne de moteur, et au moins un capot moteur articulé en rotation selon un axe de rotation défini par au moins deux charnières d'articulation, l'ensemble propulsif d'aéronef étant configuré de sorte que l'axe de rotation desdites au moins deux charnières d'articulation du capot moteur articulé est positionné au-dessus de ladite face supérieure dudit mât moteur.

L'ensemble propulsif comprend en outre un deuxième capot moteur respectivement articulé en rotation autour d'un deuxième axe de rotation défini par au moins deux autres charnières d'articulation et positionné au-dessus de ladite face supérieure.

Les deux axes de rotation desdits capots moteur sont confondus pour ne former qu'un axe de rotation unique autour duquel sont articulés les deux capots moteur.

L'ensemble propulsif d'aéronef selon l'invention peut comprendre les caractéristiques suivantes :
- Les deux axes de rotation desdits capots moteur présentent un angle d'ouverture inférieur à vingt degrés.

Un autre objet de l'invention est un aéronef comprenant au moins un ensemble propulsif d' aéronef tel que précédemment décrit.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints :
[Fig. 1] illustre schématiquement et symboliquement une coupe d'un ensemble propulsif à double flux d'aéronef, vu de face, dans une configuration selon laquelle des capots moteur latéraux articulés sont fermés ;
[Fig. 2] illustre schématiquement et symboliquement une coupe de l'ensemble propulsif à double flux d'aéronef déjà représenté sur la Fig. 1 dans une configuration selon laquelle les capots moteur latéraux articulés sont ouverts ;
[Fig. 3] illustre schématiquement et symboliquement une coupe d'un ensemble propulsif d'aéronef de type dit turbopropulseur dans une configuration selon laquelle des capots moteur latéraux articulés sont fermés ;
[Fig. 4] illustre schématiquement et symboliquement une coupe de l'ensemble propulsif de type turbopropulseur d'aéronef déjà représenté sur la Fig. 3 dans une configuration selon laquelle les capots moteur latéraux articulés sont ouverts ;
[Fig. 5a] décrit un agencement de ferrures de charnières de capot d'un ensemble propulsif d'aéronef de type turbopropulseur, selon un premier mode de réalisation qui n'entre pas dans le champ d'application des revendications ;
[Fig. 5b] décrit l'agencement de ferrures de charnières de capot déjà représenté sur la Fig. 5a, vu de dessus ;
[Fig. 6] décrit un agencement de ferrure de charnières de capot d'un ensemble propulsif d'aéronef de type Turbopropulseur, selon un deuxième mode de réalisation qui n'entre pas dans le champ d'application des revendications ;
[Fig. 7] décrit un agencement de ferrure de charnières de capot d'un ensemble propulsif d'aéronef de type Turbopropulseur, selon un troisième mode de réalisation ;
[Fig. 8] décrit un aéronef comprenant au moins un ensemble propulsif d'aéronef tel que représenté sur les Fig. 3 et Fig. 4.

### EXPOSÉ DÉTAILLÉ DE MODES DE RÉALISATION

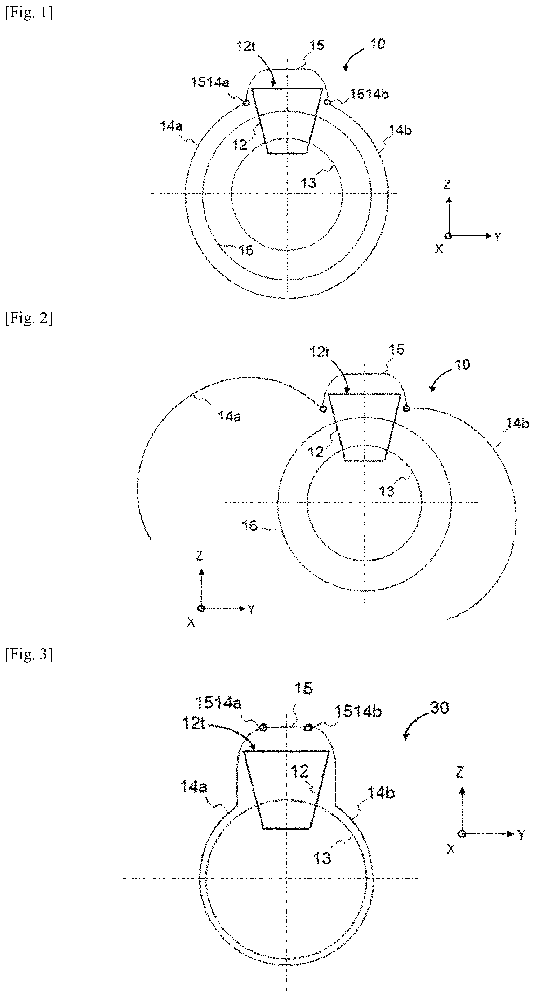

Un agencement de moteur à double flux d'aéronef est décrit symboliquement, vu de face, en relation avec la Fig. 1. Cet agencement comprend un mât moteur 12, caissonné, configuré pour la fixation sous voilure d'un moteur à double flux et de son carénage de moteur à double flux. Le terme carénage désigne ici l'ensemble des éléments de capotage et des éventuels carters qui forment le profil aérodynamique extérieur du moteur. L'ensemble ainsi agencé (le moteur, son carénage et le mât moteur) est nommé ici ensemble propulsif 10 d'aéronef. L'axe longitudinal central de l'ensemble propulsif 10 d'aéronef est parallèle à un axe X de référence. Un axe Y perpendiculaire à l'axe X définit une direction transverse et un axe Z, perpendiculaire à l'axe X et à l'axe Y, définit une direction verticale dont les valeurs d'abscisse croissent vers le haut. Un tel repère orthonormé X, Y, Z est classiquement utilisé comme référence pour ce qui concerne l'agencement mécanique des aéronefs et en particulier des avions lorsqu'ils sont posés sur un sol considéré comme horizontal (pour la définition de l'axe Z, vertical).

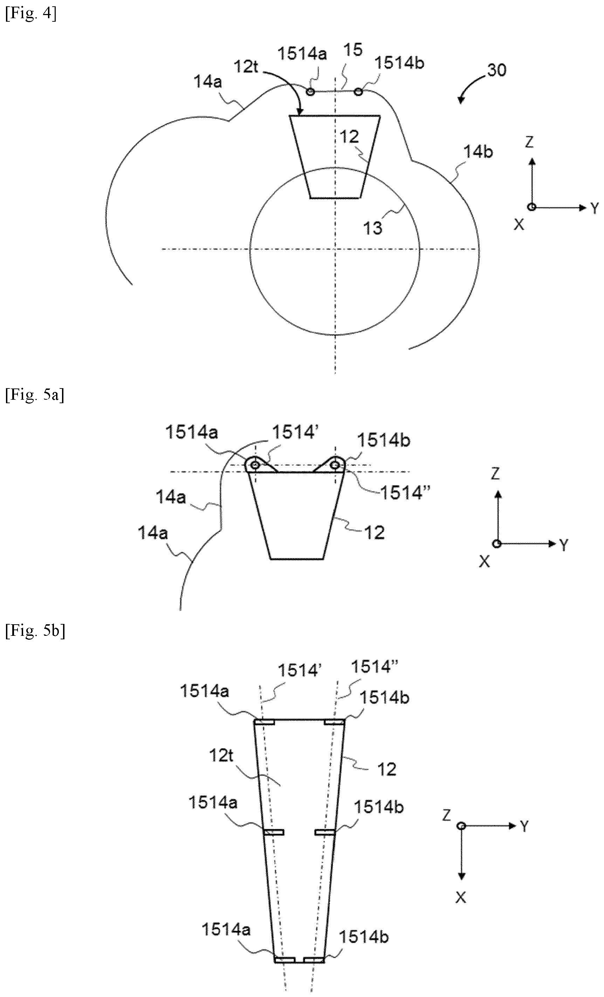

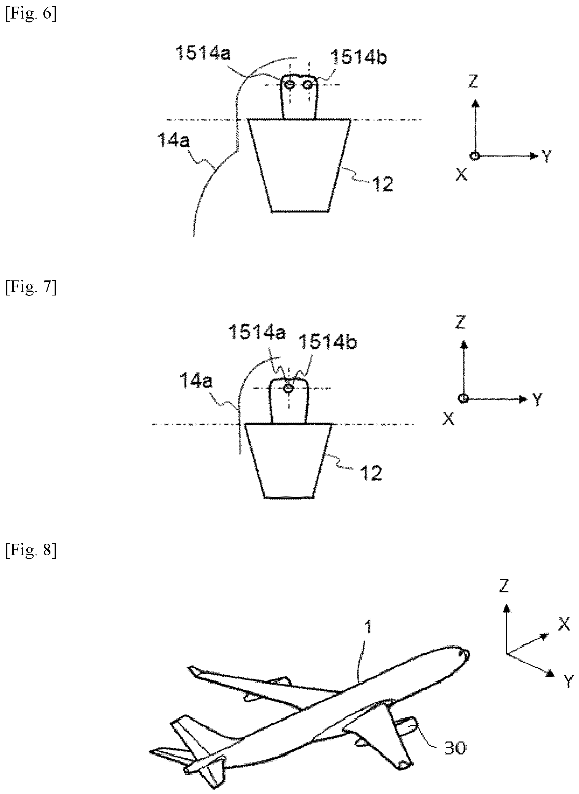

L'ensemble propulsif 10 d'aéronef comprend le mât moteur 12 qui porte des parties interne 13 et externe 16 du moteur d'aéronef à double flux représenté. Le mât moteur 12 est un mât dit « boxé » ou « caissonné » en ce sens qu'il présente une forme globale de caisson, par opposition à une structure de mât en treillis. Les parties interne 13 et externe 16 du moteur à double flux sont agencées de façon concentrique l'une par rapport à l'autre. Selon un mode de réalisation, la partie supérieure du mât moteur 12 est recouverte d'un capotage supérieur fixe 15. Selon une variante (représentée sur la figure 7 pour un moteur de type turbopropulseur mais qui resterait valable pour un moteur à double flux), le capotage supérieur fixe 15 n'existe pas et les bords « intérieurs » de capots moteur amovibles latéraux sont agencés bord contre bord ou séparés par un simple interstice, en partie supérieure de l'ensemble propulsif 10. Selon l'exemple de réalisation représenté sur la Fig. 1, qui n'entre pas dans le champ d'application des revendications, les parties interne 13 et externe 16 de l'ensemble propulsif 10 d'aéronef sont couvertes par deux capots moteur articulés 14a et 14b. Le capot moteur 14a articulé est agencé d'un côté du moteur par rapport à l'axe longitudinal central du moteur, et le capot articulé 14b est agencé de l'autre côté de l'axe longitudinal central, par rapport au capot moteur 14a articulé. Ainsi, il est possible d'accéder à des éléments intérieurs de l'ensemble propulsif 10 d'aéronef depuis les deux côtés latéraux du moteur. Le capot moteur 14a est articulé en rotation autour d'un axe de rotation (ou axe d'articulation) défini par au moins deux charnières 1514a, et donc par des ferrures de charnière portant ces charnières 1514a. Le capot moteur 14b est articulé en rotation autour d'un axe de rotation (ou axe d'articulation) défini par au moins deux charnières 1514b, et donc par des ferrures de charnière portant ces charnières 1514b. Le mât moteur 12 comprend une face supérieure 12t. Le terme face supérieure désigne ici une face haute, ou encore une face orientée dans le sens des valeurs d'abscisse croissantes selon l'axe vertical Z. S'agissant d'un mât caissonné, c'est à dire qui présente une forme globale de caisson, la face supérieure 12t est définie par la forme que présente le longeron supérieur du caisson de structure primaire du mât moteur 12. Selon un mode de réalisation, trois charnières 1514a et trois charnières 1514b (dont les positions respectives sont définies par des ferrures de charnière les portant) définissent respectivement des axes de rotation 1514' et 1514" (visibles sur la Fig. 5b) des capots moteur 14a et 14b articulés. La **Fig. 2** illustre l'ensemble propulsif 10 d'aéronef lorsque les capots moteur 14a et 14b articulés de l'ensemble propulsif 10 d'aéronef sont en position ouverte. Selon l'exemple illustré, le capot moteur 14a est complètement ouvert et le capot moteur 14b est ouvert dans une position intermédiaire ou « semi-ouverte ».

Un ensemble propulsif 30 d'aéronef, de type turbopropulseur est décrit en relation avec la **Fig. 3****,** selon un mode de réalisation qui n'entre pas dans le champ d'application des revendications. Cette architecture de moteur turbopropulseur diffère notamment de celle à double flux décrite précédemment du fait d'une absence de carénage de soufflante, désignée ci-avant comme la partie externe 16 de l'ensemble propulsif. Ainsi, le flux secondaire du moteur est ouvert à tout carénage moteur externe, capot moteur fixe ou capot moteur articulé, et ces éléments sont agencés directement autour de la partie interne 13 de l'ensemble propulsif 30 d'aéronef. Astucieusement et avantageusement, les charnières et donc les axes de rotation des capots moteur 14a et 14b sont positionnés au-dessus de la surface supérieure 12t du mât moteur 12, c'est-à-dire au-dessus d'une surface définie par la forme que présente le longeron supérieur du caisson du mât moteur 12. Ainsi, les portions de carénage sensiblement verticales et latérales au mât moteur 12 sont incluses dans les capots moteur 14a et 14b articulés, et il est possible d'agencer les capots moteur articulés en conservant l'architecture globale du mât moteur 12 et en satisfaisant les contraintes de carénage (ou capotage) moteur propres à la forme de la partie interne 13 de l'ensemble propulsif 30 d'aéronef. Un tel agencement évite en outre des conflits de positionnement de certains éléments mobiles des capots moteur 14a et 14b articulés (par exemple des ferrures en col de cygne) avec des éléments fixes en présence. La **Fig. 4** illustre l'ensemble propulsif 30 d'aéronef lorsque les capots moteur 14a et 14b de l'ensemble propulsif 30 d'aéronef sont en position ouverte. Selon l'exemple illustré, le capot moteur 14a articulé est complètement ouvert et le capot moteur 14b articulé est ouvert dans une position intermédiaire ou semi-ouverte.

La **Fig. 5a** illustre un positionnement des charnières 1514a et 1514b et donc des axes de charnières 1514' et 1514" au-dessus de la face 12t du mât moteur, en fonction d'un agencement des ferrures de charnières, selon un premier mode de réalisation qui n'entre pas dans le champ d'application des revendications. La **Fig. 5b** illustre symboliquement et en vue de dessus ce positionnement des charnières 1514a et 1514b et donc des axes de charnières 1514' et 1514" au-dessus de la face 12t du mât moteur. Selon cet agencement, les axes 1514' et 1514" de rotation des capots moteur ne sont pas parallèles entre eux quand les faces latérales du mât moteur 12 ne sont pas parallèles entre elles (ce qui est le cas selon l'exemple d'implémentation illustré sur la Fig. 5b). En effet, selon cette configuration, les ferrures des charnières 1514a et 1514b sont respectivement agencées sur la face supérieure 12t du mât moteur 12 vers l'extérieur, c'est-à-dire en étant proches des arêtes qui délimitent respectivement la face supérieure 12t avec chacune des deux faces latérales du mât moteur 12.

A des fins de simplification, la Fig. 5a ne représente que le capot moteur 14a. Il en est de même pour les Fig. 6 et Fig. 7.

La **Fig. 6** illustre un positionnement des charnières et donc des axes de charnières au-dessus de la face 12t du mât moteur, en fonction d'un agencement des ferrures de charnières selon un deuxième mode de réalisation qui n'entre pas dans le champ d'application des revendications. Selon ce deuxième mode de réalisation, les charnières 1514a et 1514b sont rapprochées en partie centrale de la surface supérieure 12t du mât moteur 12, dans une position plus haute que selon le mode de réalisation précédemment décrit en relation avec la Fig. 5a. Avantageusement, une position plus élevée, caractérisée par une distance supérieure à une valeur seuil prédéterminée entre chacun des axes de rotation des capots moteur 14a et 14b articulés et la face supérieure du mât moteur 12t, permet de se positionner au plus près de la peau aérodynamique et d'éviter des conflits de position entre les éléments mobiles articulés et les pièces fixes en présence tout en conservant l'architecture globale du mât moteur 12. Les termes « architecture globale du mât moteur 12 » désignent ici la forme et les dimensions de la structure du mât moteur se rapportant notamment à la structure primaire de l'aéronef, et en dehors des ferrures de charnières des capots moteurs articulés.

La **Fig. 7** illustre un positionnement des charnières 1514a et 1514b, et donc des axes de charnières 1514' et 1514", au-dessus de la face 12t du mât moteur, en fonction d'un agencement des ferrures de charnières selon un troisième mode de réalisation. Selon ce troisième mode de réalisation, les deux axes de charnières (ou axes de rotation des capots moteur 14a et 14b articulés) sont confondus pour ne former qu'un seul axe d'articulation commun pour les deux capots moteur 14a et 14b. Avantageusement, il est ainsi possible de s'affranchir de l'utilisation du capotage supérieur fixe 15 tel qu'implémenté selon les modes de réalisation décrits en relation avec les Fig. 1, Fig. 2, Fig. 3 et Fig. 4.

La **Fig. 8** illustre un aéronef 1 comprenant avantageusement au moins un ensemble propulsif 30.

Bien évidemment, et quel que soit le mode de réalisation, les capots moteur 14a et 14b articulés, ainsi que le capotage supérieur fixe 15 (quand il est présent) peuvent être assortis d'éléments d'étanchéité configurés pour assurer une étanchéité entre l'intérieur et l'extérieur du capotage, lorsque les capots moteur 14a et 14b articulés sont fermés, par exemple des joints en bordure des capots moteur.

## Revendications

1. Ensemble propulsif (30) d'aéronef comprenant un mât moteur (12) présentant une forme globale de caisson et une face supérieure (12t), une partie interne de moteur (13) et au moins un capot moteur (14a) articulé en rotation selon un axe de rotation (1514') défini par au moins deux charnières d'articulation (1514a), ledit axe de rotation (1514') desdites au moins deux charnières d'articulation (1514a) étant positionné au-dessus de ladite face supérieure (12t) dudit mât moteur (12), l'ensemble propulsif comprenant en outre un deuxième capot moteur (14b) respectivement articulé en rotation autour d'un deuxième axe de rotation (1514") défini par au moins deux charnières d'articulation (1514b) et positionné au-dessus de ladite face supérieure (12t), ledit ensemble propulsif d'aéronef étant **caractérisé en ce que** les deux axes de rotation (1514', 1514") desdits capots moteur (14a, 14b) sont confondus pour ne former qu'un axe de rotation unique autour duquel sont articulés les deux capots moteur (14a, 14b).

2. Aéronef (2) comprenant au moins un ensemble propulsif (30) selon la revendication 1.

## Patentansprüche

1. Flugzeugantriebseinheit (30), die einen Triebwerkspylon (12) umfasst, der eine Kastengrundform und eine Oberseite (12t), einen inneren Triebwerksteil (13) und mindestens eine Triebwerksabdeckung (14a), die entlang einer durch mindestens zwei Gelenkscharniere (1514a) definierten Drehachse (1514') drehbar angelenkt ist, aufweist, wobei die Drehachse (1514') der mindestens zwei Gelenkscharniere (1514a) über der Oberseite (12t) des Triebwerkspylons (12) positioniert ist, wobei die Antriebseinheit ferner eine zweite Triebwerksabdeckung (14b) umfasst, die um eine durch mindestens zwei Gelenkscharniere (1514b) definierte und über der Oberseite (12t) positionierte zweite Drehachse (1514") drehbar angelenkt ist, wobei die Flugzeugantriebseinheit **dadurch gekennzeichnet ist, dass** die beiden Drehachsen (1514', 1514") der Triebwerksabdeckungen (14a, 14b) zusammenfallen, so dass sie nur eine einzige Drehachse bilden, um welche die beiden Triebwerksabdeckungen (14a, 14b) angelenkt sind.

2. Flugzeug (2), das mindestens eine Antriebseinheit (30) nach Anspruch 1 umfasst.

## Claims

1. Aircraft propulsion assembly (30) comprising an engine pylon (12) having the overall shape of a box and an upper face (12t), an internal engine part (13) and at least one engine cowl (14a) articulated so as to rotate about an axis of rotation (1514') defined by at least two articulation hinges (1514a), said axis of rotation (1514') of said at least two articulation hinges (1514a) being positioned above said upper face (12t) of said engine pylon (12), the propulsion assembly further comprising a second engine cowl (14b) respectively articulated so as to rotate about a second axis of rotation (1514") defined by at least two articulation hinges (1514b) and positioned above said upper face (12t), said aircraft propulsion assembly being **characterized in that** the two axes of rotation (1514', 1514") of said engine cowls (14a, 14b) coincide so as to form just one single axis of rotation about which the two engine cowls (14a, 14b) are articulated.

2. Aircraft (2) comprising at least one propulsion assembly (30) according to Claim 1.
